# FASCICULE DE BREVET EUROPEEN

(11) **EP 2 614 363 B1**
(45) Date de publication et mention de la délivrance du brevet: **30.07.2014**
(21) Numéro de dépôt: 11754371.0
(22) Date de dépôt: 06.09.2011
(51) Int. Cl.: G01N 21/71, G01J 3/443, G01J 3/02

(54) **DISPOSITIF DE CARTOGRAPHIE ET D'ANALYSE À HAUTE RÉSOLUTION D'ÉLÉMENTS DANS DES SOLIDES**
GERÄT ZUM KARTIEREN UND HOCHAUFLÖSENDER ANALYSE VON ELEMENTEN IN FESTSTOFFEN
APPARATUS FOR MAPPING AND HIGH RESOLUTION ANALYSIS OF ELEMENTS IN SOLIDS

(30) Priorité: 06.09.2010 FR 1057060
(43) Date de publication de la demande: 17.07.2013
(73) Titulaire: Commissariat à l'Énergie Atomique et aux Énergies Alternatives, 75015 Paris (FR)
(72) Inventeur: LACOUR, Jean-Luc, F-91140 Villebon-Sur-Yvette (FR); CARON, Nadège, F-78000 Versailles (FR); BERANGER, Kévin, F-Senlis 60300 (FR)
(74) Mandataire: Collet, Alain
(86) Numéro de dépôt international: PCT/EP2011/065356
(87) Numéro de publication internationale: WO 2012/032024

(56) Documents cités:
- FR-A1- 2 800 466
- FR-A1- 2 929 011
- US-A1- 2003 218 745
- US-A1- 2007 296 967
- HAIDER A F M Y ET AL: "Elemental profiling and determination of Ti content of the beach sand samples of Bangladesh using LIBS technique", OPTICS AND LASER TECHNOLOGY ELSEVIER SCIENCE LTD. UK, vol. 42, no. 6, 27 janvier 2010 (2010-01-27), pages 969-974, XP002631828, ISSN: 0030-3992
- ABDULMADJID S N ET AL: "An improved approach for hydrogen analysis in metal samples using single laser-induced gas plasma and target plasma at helium atmospheric pressure", APPLIED PHYSICS B ; LASERS AND OPTICS, SPRINGER, BERLIN, DE, vol. 82, no. 1, 1 janvier 2006 (2006-01-01), pages 161-166, XP019337601, ISSN: 1432-0649, DOI: DOI:10.1007/S00340-005-1973-4

## Description

La présente invention concerne un dispositif de cartographie et d'analyse à haute résolution d'éléments dans des solides. Elle peut plus particulièrement s'appliquer à l'analyse élémentaire de l'hydrogène et de l'oxygène par spectrométrie d'émission optique sur plasma produit par laser, dans le domaine de l'industrie nucléaire, ou encore de l'industrie aéronautique ou spatiale.

Dans des applications telles que la caractérisation de dispositifs soumis à des sources radioactives, ou encore la caractérisation de l'aptitude au vieillissement de dispositifs employés dans des environnements particulièrement sévères, par exemple dans des aéronefs ou des engins spatiaux, il peut s'avérer indispensable de procéder à l'analyse élémentaire d'échantillons. Il peut notamment être judicieux de procéder à l'analyse élémentaire de l'hydrogène et de l'oxygène présents dans des échantillons de matériaux radioactifs. Plus précisément, il peut s'avérer nécessaire de pouvoir dresser une cartographie de ces éléments au sein de l'échantillon analysé. Une telle analyse peut s'avérer notamment particulièrement utile dans des études de fragilisation de métaux par l'hydrogène, ou bien dans des études de vieillissement de gaines de combustibles en présence d'oxygène, ou encore dans des études de fragilisation de gaines de combustibles causée par la formation d'hydrures, ces derniers favorisant la propagation de fissures.

Il existe diverses méthodes connues de cartographie d'éléments présents dans des échantillons.

Une première méthode connue de cartographie de l'hydrogène ou bien de l'oxygène, consiste à utiliser une microsonde nucléaire, dont le fonctionnement se base sur l'interaction nucléaire d'un faisceau d'hélions avec un échantillon cible. La seule méthode d'analyse directe permettant de cartographie l'hydrogène avec une grande sensibilité et avec un haute résolution, typiquement de l'ordre de 2x8 µm², est la méthode communément désignée suivant l'acronyme ERDA correspondant à la terminologie anglaise "Elastic Recoil Detection Analysis". Selon la méthode ERDA, le faisceau d'ions incident qui pénètre dans l'échantillon interagit avec les noyaux des atomes constituant ce dernier, provoquant ainsi l'émission d'un atome de recul. Cette interaction, qui s'étend de la surface de l'échantillon jusqu'à environ un micron de profondeur, implique que cette méthode permet de s'affranchir des pollutions de surface. Par exemple, dans le cas de la cartographie de l'hydrogène, la section efficace de l'interaction ion-hydrogène étant très faible, il est possible selon cette méthode de réaliser, d'une manière typique, une cartographie de l'hydrogène de 300 x 300 µm² en une durée de l'ordre de 2 à 3 heures. L'hydrogène ainsi sondé est détectable à partir d'une concentration de l'ordre de 30 ppm en masse, et d'une manière absolue. Cette méthode présente cependant un certain nombre d'inconvénients, en ce qu'elle requiert de travailler dans des enceintes sous vide, et qu'elle met en oeuvre des dispositifs appartenant à la famille dite des grands instruments, dont l'accès peut être soumis à une approbation par une commission scientifique.

Une deuxième méthode connue de cartographie d'éléments, consiste à utiliser une microsonde électronique, dont le fonctionnement se base sur l'interaction électron-matière, via un faisceau d'électrons collimatés sur la surface de l'échantillon. Cette méthode n'est utilisée que de manière locale, sur des échantillons pour lesquels les éléments de la matrice ont une masse atomique très différente de celle de l'hydrogène. Ainsi, une analyse élémentaire via cette méthode ne permet pas la détection de l'hydrogène. En effet, la microsonde électronique ne peut pas permettre la détection d'éléments plus légers que l'oxygène car ceux -ci sont peu ou ne sont pas observables, d'une part à cause des limites technologiques, notamment liées aux détecteurs employés, et d'autre part à cause des phénomènes physiques en jeu, notamment d'absorption de rayons X.

Une troisième méthode connue de cartographie d'éléments tels que l'hydrogène ou l'oxygène, est la spectrométrie de masse à ions secondaires, communément désignée suivant l'acronyme SIMS correspondant à la terminologie anglaise "Secondary Ions Mass Spectrometry". Selon cette méthode, des ions sont bombardés à la surface d'un échantillon, le bombardement entraînant l'érosion de l'échantillon par arrachement des atomes. Les atomes arrachés sont ionisés puis caractérisés dans un spectromètre de masse. Cette méthode permet une analyse de surface de forte sensibilité, en permettant d'une manière typique d'atteindre des limites de détection de l'ordre de 10⁻⁷ %, ou encore 1 ppb, avec une résolution latérale inférieure à la centaine de nanomètres. Cette méthode présente cependant un certain nombre d'inconvénients, notamment en ce qu'elle requiert une mise en oeuvre dans un vide poussé, impliquant des risques de dégazage de l'eau non liée de l'échantillon, qui suffit à perturber la mesure de l'hydrogène initialement présent.

On peut également citer une méthode d'analyse de routine de répartition des hydrures, consistant à analyser une image après préparation métallographique par attaque chimique d'un échantillon. Une image d'origine est composée de pixels représentant un échantillon d'un alliage, les empreintes des hydrures étant représentées par des groupements de pixels, cette méthode met un oeuvre un procédé comportant des étapes de traitement de l'image, rassemblées au sein d'une étape dite de squelettisation, pour obtenir le squelette des groupements de pixels contenus dans l'image. L'étape de squelettisation est suivie d'une étape d'analyse portant sur les groupements ainsi squelettisés. L'étape d'analyse permet la détermination indirecte de la teneur en hydrogène ainsi que l'étude morphologique des hydrures. Cette méthode est une méthode dite semi-quantitative, basée sur une comparaison des mesures avec des étalons, et présente notamment l'inconvénient de ne pas être applicable dans le cas de concentrations en hydrures élevées, typiquement supérieures à 1500 ppm, du fait de la difficulté de séparer par des traitements informatiques les empreintes des hydrures présentant de telles concentrations.

Il existe d'autres méthodes connues, consistant à calciner l'échantillon à caractériser afin de collecter l'hydrogène sous forme gazeuse pour ensuite l'analyser, par exemple en utilisant un détecteur de gaz pour une limite de détection de l'ordre de quelques dizaines de ppb, ou bien par spectrométrie de gaz, pour une limite de détection typiquement inférieure à la dizaine de ppb. Cependant des inconvénients de ces méthodes sont notamment que celles-ci ne permettent de réaliser qu'une analyse quantitative globale, entraînent une destruction de l'échantillon, et qu'elles ne permettent pas de réaliser une cartographie élémentaire de l'échantillon.

Il existe enfin une méthode connue dite de spectrométrie d'émission optique par plasma produit par laser, communément désignée suivant l'acronyme LIBS correspondant à la terminologie anglaise "Laser-Induced Breakdown Spectroscopy". Cette méthode consiste essentiellement à irradier un échantillon par un faisceau laser impulsionnel intense, dit "faisceau d'ablation", conduisant au chauffage et à l'ablation de la matière sous la forme d'un plasma. L'analyse des raies atomiques et ioniques du rayonnement émis par ce plasma permet alors de déterminer sa composition, qui est corrélée à celle de l'échantillon irradié. L'échantillon est disposé sur une platine qui comprend des moyens de déplacement précis de l'échantillon, permettant de déterminer la distribution des concentrations élémentaires, et de réaliser ainsi une cartographie élémentaire de l'échantillon. Un dispositif d'analyse élémentaire suivant une méthode LIBS est par exemple décrit dans le brevet publié sous la référence FR 2800466. La méthode LIBS présente l'avantage d'être rapide, sans contact, et de ne pas requérir une préparation fastidieuse de l'échantillon, et de ne pas requérir une enceinte de mesure, les mesures pouvant être réalisées en atmosphère ambiante

Un but de la présente invention est de pallier au moins les inconvénients inhérents aux différentes méthodes connues précitées, en proposant un dispositif de cartographie d'éléments tels que de l'hydrogène et de l'oxygène présents dans des échantillons se basant sur une méthode de spectrométrie d'émission optique par plasma produit par laser telle que décrite dans le brevet FR 2800466 précité, le dispositif selon l'invention offrant une résolution et une sensibilité accrues, et pouvant opérer dans des conditions environnementales standard, c'est-à-dire notamment sous pression atmosphérique, réduisant ainsi les contraintes matérielles et le temps de mise en place de l'analyse.

Un avantage de l'invention est qu'elle permet également l'analyse de matériaux isolants ainsi que de matériaux conducteurs.

Un autre avantage de l'invention est qu'elle permet l'analyse simultanée de plusieurs éléments, par exemple de l'hydrogène et de l'oxygène.

A cet effet, l'invention a pour objet un dispositif de cartographie et d'analyse d'au moins un élément d'intérêt compris dans un échantillon solide par spectrométrie d'émission optique sur plasma produit par laser, comprenant :
- un module de génération d'un faisceau laser pulsé, un système de mise en forme du faisceau comprenant au moins une lentille de mise en forme concentrant l'énergie du faisceau au travers d'un diaphragme dudit dispositif, une première lentille de collimation projetant à l'infini l'image du diaphragme, un objectif de microscope focalisant l'image du diaphragme sur la surface de l'échantillon,
- un système de recueil, de traitement et d'analyse du signal optique issu du rayonnement d'un plasma généré en surface de l'échantillon comprenant au moins des moyens de recueil du signal, des moyens de mesure du signal permettant une analyse spectrale du signal optique, et des moyens de traitement et d'analyse permettant l'analyse de la composition élémentaire de l'échantillon, le dispositif de cartographie et d'analyse comprenant des moyens de déplacement de l'échantillon synchronisé avec les impulsions du laser pulsé pour réaliser la cartographie élémentaire,
le dispositif étant configuré pour que le recueil du signal optique soit réalisé pendant une fenêtre temporelle de durée déterminée, le dispositif étant caractérisé en ce que l'instant de départ de la fenêtre temporelle présente un retard par rapport aux impulsions du laser pulsé adapté à la raie atomique de l'élément d'intérêt de façon à minimiser le plus possible la contribution du continuum, et ladite durée déterminée est adaptée de façon à exploiter au maximum la durée de vie de ladite raie atomique, les moyens de mesure du signal étant formés par au moins un filtre interférentiel disposé sur un photomultiplicateur dudit dispositif, le filtre interférentiel laissant passer les fréquences situées dans une bande étroite autour de la fréquence correspondant à la longueur d'onde de la raie d'émission de l'élément d'intérêt.

Dans un mode de réalisation préféré de l'invention, les moyens de recueil du signal peuvent être formés par une fibre optique dont une extrémité est disposée à proximité de la surface de l'échantillon.

Dans un mode de réalisation préféré de l'invention, les moyens de mesure du signal peuvent être formés par au moins un spectromètre.

Dans un mode de réalisation préféré de l'invention, le filtre interférentiel peut être à double cavité.

Dans un mode de réalisation préféré de l'invention, le filtre interférentiel peut être disposé sur le photomultiplicateur par l'intermédiaire d'un support comprenant des moyens de réglage de l'orientation du filtre interférentiel, ajustant la valeur de la longueur d'onde centrale du filtre interférentiel.

Dans un mode de réalisation préféré de l'invention, le système de mise en forme du faisceau peut comprendre en outre des moyens d'ajustement de l'énergie du faisceau.

Dans un mode de réalisation préféré de l'invention, les moyens d'ajustement de l'énergie du faisceau peuvent être formés par un atténuateur.

Dans un mode de réalisation préféré de l'invention, la taille d'interaction entre le laser pulsé et l'échantillon peut être déterminée par la dimension principale du diaphragme, combinée avec le grandissement de l'objectif de microscope, l'énergie étant ajustée via les moyens d'ajustement de l'énergie du faisceau.

Dans un mode de réalisation préféré de l'invention, le dispositif de cartographie et d'analyse peut comprendre en outre des moyens d'injection de gaz sensiblement au niveau de la surface de l'échantillon où le plasma est généré,

Dans un mode de réalisation préféré de l'invention, les moyens d'injection de gaz peuvent comprendre un premier tube pour l'injection d'hélium.

Dans un mode de réalisation préféré de l'invention, les moyens d'injection de gaz peuvent comprendre en outre un second tube pour l'injection d'argon.

Dans un mode de réalisation préféré de l'invention, le dispositif de cartographie et d'analyse peut comprendre en outre des moyens de positionnement précis de l'échantillon.

Dans un mode de réalisation préféré de l'invention, le dispositif de cartographie et d'analyse peut être adapté pour la cartographie de l'hydrogène simultanément à la cartographie de l'oxygène, et comprendre un système de recueil, de traitement et d'analyse adapté à la cartographie de l'oxygène et un système de recueil, de traitement et d'analyse adapté à la cartographie de l'hydrogène.

Dans un mode de réalisation préféré de l'invention, le dispositif de cartographie et d'analyse peut comprendre en outre un système de recueil, de traitement et d'analyse adapté à la cartographie du lithium, lesdits moyens de mesure du signal dudit système de recueil, de traitement et d'analyse adapté à la cartographie du lithium comprenant un spectromètre..

D'autres caractéristiques et avantages de l'invention apparaîtront à la lecture de la description, donnée à titre d'exemple, faite en regard des dessins annexés qui représentent :
- la figure 1, un schéma représentant de manière synoptique un dispositif de cartographie élémentaire selon un mode de réalisation préféré de l'invention ;
- la figure 2, un schéma représentant un module de focalisation formant système de mise au point du faisceau laser d'un dispositif selon un exemple de réalisation préféré de l'invention ;
- la figure 3, des courbes illustrant le gain apporté par l'utilisation d'un flux d'hélium pour l'analyse de l'hydrogène ;
- les figures 4a et 4b, des schémas représentant de manière synoptique, des dispositifs de couplage entre un signal optique résultant du rayonnement du plasma, basés respectivement sur un spectromètre et sur un filtre interférentiel, selon un exemple de réalisation préféré de l'invention ;
- la figure 5, des courbes illustrant les performances d'un filtre interférentiel, utilisé dans un exemple de réalisation préféré de l'invention ;
- la figure 6, des courbes illustrant les profils temporels des signaux d'émission issus du rayonnement par le plasma, en regard d'une fenêtre temporelle de mesure, selon un exemple de réalisation préféré de l'invention ;
- la figure 7, un schéma illustrant l'application d'un jet de gaz sur un échantillon sous analyse, dans un exemple de réalisation préféré de l'invention.

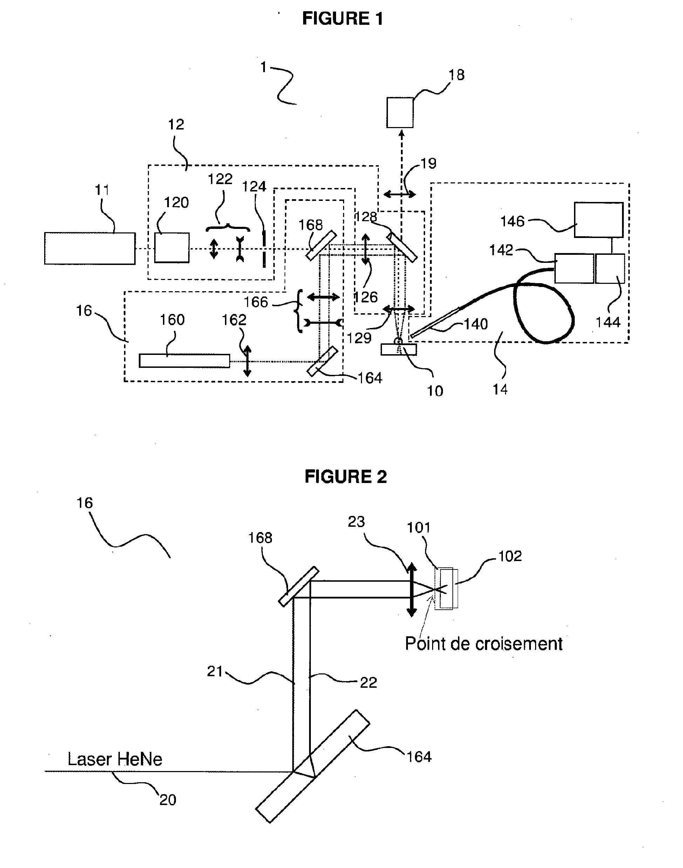

La figure 1 présente un schéma représentant de manière synoptique un dispositif de cartographie élémentaire selon un mode de réalisation préféré de la présente invention.

Un dispositif de cartographie élémentaire 1 d'un échantillon 10 disposé sur un support non représenté sur la figure, peut comprendre, dans un exemple de réalisation préféré de l'invention, un module de génération d'un faisceau laser pulsé 11 associé à un premier système de mise en forme du faisceau 12. Le dispositif de cartographie élémentaire 1 comprend également un système de recueil, de traitement et d'analyse 14 du signal optique issu du rayonnement du plasma généré en surface de l'échantillon 10.

Avantageusement, le dispositif de cartographie élémentaire 1 peut comprendre un module de focalisation 16 permettant un ajustement précis de l'impact du faisceau laser sur l'échantillon 10, en association avec un système de visualisation comprenant par exemple une caméra 18 associée à un système optique 19.

Le module de génération d'un faisceau laser pulsé 11 peut par exemple émettre un faisceau laser d'une longueur d'onde dans le domaine des ultraviolets, par exemple de l'ordre de 266 nanomètres. La durée des impulsions peut être de l'ordre de quelques nanosecondes, par exemple 4 ns.

Le système de mise en forme du faisceau 12 peut comprendre des moyens d'ajustement de l'énergie du faisceau 120 pouvant être formés par un atténuateur, par exemple un atténuateur à lames, permettant la réflexion d'une partie du faisceau par une lame miroir adaptée en combinaison avec une lame simple antireflet compensant la déviation du faisceau, ou bien par un ou une pluralité de polariseurs, des lames à retard d'une demi-longueur d'onde étant disposées entre deux polariseurs. Une lentille ou un télescope de mise en forme 122 peut être disposée en aval des moyens d'ajustement de l'énergie du faisceau 120, et permet de concentrer l'énergie du faisceau à travers un diaphragme 124, ainsi que l'ajustement de la divergence du faisceau en sortie du diaphragme 124. Une première lentille de collimation 126 est disposée en aval du diaphragme 124. La première lentille de collimation 126 peut par exemple être formée par une lentille composée convergente projetant à l'infini l'image du diaphragme 124. Un objectif de microscope 129 permet de produire l'image du diaphragme 124 à la surface de l'échantillon 10. La première lentille de collimation 126 offre une focale adaptée pour obtenir un agrandissement suffisant en combinaison avec l'objectif de microscope 129. Il est en outre avantageux que l'objectif de microscope 129 offre une distance de travail suffisante pour permettre l'installation de toute l'instrumentation adéquate autour du plasma, c'est-à-dire, d'une manière typique, de quelques millimètres. Egalement, l'ouverture numérique de l'objectif de microscope 129 doit être la plus grande possible, afin d'obtenir la meilleure interaction laser-matière possible. D'une manière typique non limitative dans un mode de réalisation préféré de la présente invention, l'ouverture numérique de l'objectif de microscope 129 peut par exemple être fixée à 0,32.

Le système de mise en forme du faisceau 12 permet ainsi de former un profil de faisceau laser au niveau de la surface de l'échantillon 10 de type communément désigné "top hat", c'est-à-dire présentant une densité d'énergie quasi-uniforme au sein du disque de l'impact avec la matière. Un tel profil présente l'avantage de limiter les variations de diamètre du cratère d'ablation créé, et permet de maîtriser la taille d'interaction laser-matière.

Il est à observer que la taille du plasma dépend de l'énergie déposée à la surface de l'échantillon 10. Lorsque le plasma est de taille plus importante, celui-ci participe d'autant plus à l'érosion de la surface de l'échantillon 10, ce qui risque d'avoir un impact négatif sur la résolution désirée. L'énergie du laser doit donc être ajustée de manière à obtenir un plasma suffisamment lumineux pour être mesuré, tout en gardant une taille suffisamment petite pour ne pas élargir significativement le cratère formé. D'une manière typique, lorsque la matrice de l'échantillon est par exemple essentiellement constituée de Zirconium, de Fer ou d'Aluminium, il est possible de fixer l'énergie du faisceau laser en sortie du diaphragme 124 à moins de 2,5 µJ pour une résolution souhaitée de l'ordre de 1 à 2 µm de fixer l'énergie à 3 à 4 µJ pour une résolution souhaitée de l'ordre de 3 µm, à environ 6 µJ pour une résolution souhaitée de 5 µm, et à plus de 15 µJ, jusqu'à des énergies de l'ordre de 100 à 200 µJ, pour des résolutions souhaitées supérieures à 10 µm. Ces valeurs peuvent différer sensiblement lorsque la matrice de l'échantillon est essentiellement constituée de matériaux différents, tels que le Cuivre, le Plomb ou l'Etain, ayant des températures de fusion plus basses ou une conductivité thermique plus grande. Il est toutefois à noter que l'éclairement sur l'échantillon 10 doit de préférence rester supérieur à 1 GW/cm², ainsi que cela est communément admis, et de préférence encore être de l'ordre de la dizaine de GW/cm².

L'objectif de microscope 129 peut être réflectif ou réfractif, et permettre l'utilisation d'un faisceau laser pulsé de forte énergie. Il peut être avantageux de choisir un objectif réfractif pour des résolutions inférieures à 5 µm, la résolution optique des objectifs de type réfractif étant meilleure que celle d'objectifs à miroirs, par exemple de type Cassegrain ou Schwarschild.

Afin d'obtenir une meilleure résolution, le diamètre du faisceau laser doit couvrir au mieux la pupille du système optique constitué par la première lentille de collimation 126 et l'objectif de microscope 129. Cela peut être réalisé par un ajustement de la divergence du faisceau laser via la lentille de mise en forme 122.

Avantageusement, un miroir dichroïque 128 adapté à la longueur d'onde du laser peut être disposé entre la première lentille de collimation 126 et l'objectif de microscope 129, de façon à permettre l'observation de l'échantillon 10 à travers l'objectif de microscope 129, par exemple via la caméra 18 associée au système optique de caméra 19.

Le système de recueil, de traitement et d'analyse 14 du signal optique issu du rayonnement du plasma généré en surface de l'échantillon 10, peut comprendre des moyens de recueil du signal 140, par exemple formés par une lentille, un miroir, ou encore une fibre optique. Le signal peut également être collecté à travers l'objectif de microscope 129. Un recueil via une fibre optique permet une plus grande souplesse, l'extrémité de la fibre optique pouvant être placé à proximité immédiate du plasma. Les moyens de recueil du signal 140 peuvent par exemple consister en une fibre optique d'un diamètre de 1 millimètre, placée à proximité immédiate du plasma, à une distance typique de l'ordre de 2 millimètres. Un tel dispositif permet d'assurer la collection du signal avec toute l'ouverture de la fibre optique, typiquement de l'ordre de 0,22, sans recourir à des moyens optiques supplémentaires. L'utilisation d'un tel dispositif est rendue possible en raison de la taille très petite du plasma, typiquement très inférieure à 1 millimètre.

L'analyse spectrale du signal peut être assurée par des moyens de mesure du signal 142, par exemple un spectromètre. Le système de recueil, de traitement et d'analyse 14 peut en outre comprendre des moyens de traitement et d'analyse 144 permettant une analyse de la composition élémentaire de l'échantillon, les moyens de traitement et d'analyse 144 étant éventuellement associés à une électronique adaptée 146, et reliés aux moyens de mesure du signal 142. Les moyens de traitement et d'analyse 144 peuvent par exemple comprendre une caméra, par exemple une caméra vidéo à capteur de type CCD intensifiée, ou encore un photomultiplicateur.

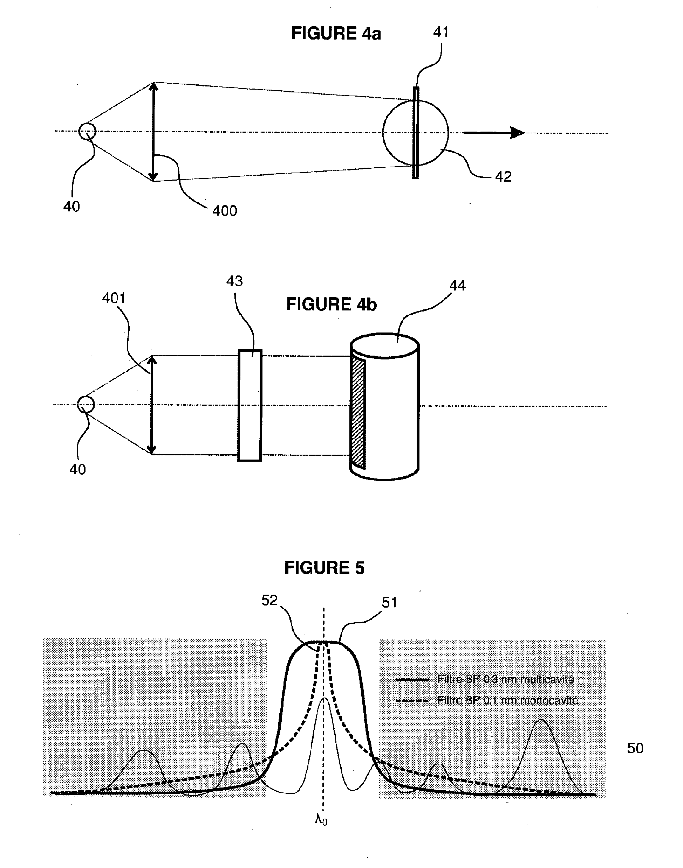

Le signal optique étant de nature transitoire, l'acquisition se fait ainsi à l'aide d'une électronique pulsée synchronisée avec les impulsions du laser d'ablation. Avantageusement, dans le but de permettre l'extraction de la partie la plus utile de ce signal, la mesure peut être réalisée avec un retard adapté à la raie atomique d'intérêt, après l'impulsion laser et pendant une fenêtre temporelle dont la durée est adaptée à son temps de vie, cette fenêtre temporelle pouvant être désignée "résolution temporelle". Il existe en effet, dans les premiers instants de la vie du plasma, un continuum d'émission gênant l'exploitation du signal. Puis lorsque le plasma s'est refroidi, l'émission de raies devient trop faible pour être exploitée, il n'est alors plus utile de procéder à la détection du signal. La fenêtre temporelle de mesure est décrite plus en détails ci-après, en référence à la figure 5.

En pratique, un cycle de mesure peut consister en une impulsion laser provoquant l'ablation du matériau de l'échantillon à analyser, et la formation du plasma. L'acquisition du signal par le système de recueil, de traitement et d'analyse 14 peut être déclenchée par l'impulsion laser. A la fin de la fenêtre temporelle de mesure, l'échantillon peut être déplacé jusqu'à la position de l'impulsion suivante. Le processus peut alors être répété autant de fois que nécessaire afin d'obtenir une image complète de l'échantillon. Dans le cas où plusieurs éléments sont analysés simultanément, ainsi que cela est décrit ci-après dans un exemple de réalisation préféré de l'invention.

Il est également possible de déplacer l'échantillon de manière continue, et déclencher le tir laser lorsque le déplacement effectué correspond à la distance désirée entre les points de mesure.

Selon une spécificité d'un mode de réalisation préféré de la présente invention, il est possible, pour effectuer une mesure sur des quantités de lumière très faibles avec des résolutions très fines, de l'ordre de 1 à 2 µm, de former les moyens de mesure du signal 142 via un filtre interférentiel plutôt que par un spectromètre, le filtre interférentiel étant placé sur un photomultiplicateur. L'utilisation d'un filtre est particulièrement avantageuse pour les résolutions typiquement inférieures à 2 µm car le plasma très petit, de l'ordre de la centaine de micromètres, est très peu lumineux. Le filtre interférentiel permet alors un recueil du signal avec un minimum de pertes. L'usage d'un filtre interférentiel comparativement à celui d'un spectromètre est explicité en détails ci-après en référence aux figures 4a et 4b illustrant des exemples de modes de réalisation.

Un dispositif de cartographie et d'analyse élémentaire selon l'un des modes de réalisation décrits peut avantageusement s'appliquer non seulement à l'oxygène et à l'hydrogène, mais également à tous les éléments, à condition que leurs raies d'émission soient suffisamment isolées ou que les paramètres temporels de celles-ci soient suffisamment différents de ceux des raies d'émission des sources parasites, de façon à ce que leur influence sur le signal d'intérêt puisse être réduite par un ajustement adapté des paramètres temporels de la mesure.

Dans le but d'obtenir un diamètre d'interaction laser-matière de l'ordre du micromètre, il est nécessaire que le positionnement de l'échantillon 10 sous le plan image du diaphragme 124 soit très précis. Ainsi, pour des diamètres souhaités typiquement inférieurs à environ 4 µm, une focalisation à 1 µm près est requise. Le module de focalisation 16 précité permet d'atteindre une telle précision. Le module de focalisation 16 peut comprendre un générateur de faisceau laser 160, par exemple de type Hélium-Néon, une lentille de focalisation 162, un diviseur de faisceau 164, par exemple formé par une lame de verre épaisse à faces parallèles présentant deux réflexions vitreuses, permettant une division du faisceau laser en deux faisceaux parallèles. Les deux faisceaux résultants sont placés sur le parcours du faisceau d'ablation à l'aide d'un miroir 168, qui peut être mobile ou non. Un télescope 166 peut être disposé en aval du diviseur de faisceau 164, et permet l'ajustement du point où les deux faisceaux se croisent sur l'échantillon 10 lorsque celui-ci se situe sur le plan image du diaphragme 124. Le fonctionnement du module de focalisation 16 est décrit en détails ci-après en référence à la figure 2.

Les moyens de positionnement précis de l'échantillon 10 décrits ci-dessus sont cités à titre d'exemple, et d'autres moyens précis de positionnement de l'échantillon 10, en eux-mêmes connus de l'état de la technique, peuvent être envisagés.

La figure 2 présente un schéma illustrant un module de focalisation 16 formant système de mise au point du faisceau laser d'un dispositif selon un exemple de réalisation préféré de l'invention.

Dans un souci de clarté de la description, la figure 2 ne représente pas le miroir dichroïque 128, l'échantillon y est ainsi représenté directement en aval du miroir 168. Egalement, le télescope 166 n'est pas représenté sur la figure 2. Un dispositif optique 23 est représenté en aval du miroir 168, et comprend notamment les éléments tels que la première lentille de collimation 126, le miroir dichroïque 128 et l'objectif de microscope 129, en référence à la figure 1 décrite précédemment. Le miroir 168 se trouve représenté directement en aval du diviseur de faisceau 164. Le faisceau 20 du laser Hélium-Néon est divisé en deux faisceaux distincts et parallèles 21 et 22 par le diviseur de faisceau 164. L'échantillon est représenté sur la figure dans deux positions différentes : une première position 101 correspondant à un bon placement de l'échantillon, et une seconde position 102 correspondant à un placement hors focale de l'échantillon.

Le réglage de la focalisation du faisceau laser sur l'échantillon peut être réalisé de la manière suivante : l'échantillon poli peut être placé sous le microscope d'ablation, et sa position peut être ajustée jusqu'à l'obtention du cratère le plus petit, présentant des bords les mieux définis possible. Le contrôle de ces paramètres peut par exemple être réalisé à l'aide d'un profilomètre optique. Le télescope 166 peut alors être ajusté de manière à ce que les deux spots issus des deux faisceaux 21, 22 visibles sur la surface de l'échantillon soient superposés. L'échantillon est ainsi correctement placé lorsque, à l'instar de la première position 101, les deux spots sont superposés. Si deux spots sont visibles sur sa surface, à l'instar de la seconde position 102 illustrée sur la figure, alors l'échantillon est hors focale. Pour la suite de la cartographie de l'échantillon, celui-ci peut être systématiquement placé de manière à ce que ces deux spots soient superposés. Des moyens d'ajustement automatique peuvent être avantageusement envisagés, et commander le déplacement de l'échantillon par un asservissement de moyens de mesure de la distance séparant les deux spots. L'échantillon peut être disposé sur une platine trait-point-plan, et le module de focalisation 16 permet également de régler l'orientation de l'échantillon afin que sa surface soit parallèle au plan image du diaphragme 124, en référence à la figure 1.

Les déplacements de l'échantillon peuvent être assurés par des platines de déplacements micrométriques offrant une précision d'au moins 0,1 µm. La vitesse de déplacement de l'échantillon doit permettre de suivre la cadence du laser pulsé d'ablation, par exemple de l'ordre de 10 Hertz. D'une manière typique, une cadence de l'ordre de 300 points de mesure par seconde peut être atteinte.

Le plasma obtenu dans un dispositif selon l'un des modes de réalisation préféré de l'invention, est de taille très réduite, et de faible luminosité. Il est connu que l'environnement atmosphérique du plasma a une influence très importante sur sa luminosité et sa durée de vie.

Il est également connu que l'argon permet notamment une augmentation de l'ordre d'un facteur 10 à 100 du signal émis. Ainsi, selon des techniques en elles-mêmes connues de l'état de la technique, il peut être envisagé d'apporter autour du plasma, un flux d'argon. Une telle technique est par exemple décrite dans le brevet FR 2800466 précité. Cependant, l'augmentation ne se produit pas dans le cas de l'hydrogène, ou encore ne se produit que faiblement dans le cas de l'oxygène.

Selon une spécificité d'un mode de réalisation préféré de la présente invention, il est proposé d'apporter au niveau du plasma un flux d'hélium, dans le but d'augmenter le signal émis.

En ce qui concerne l'élément hydrogène, l'intensité de la raie Hα de l'hydrogène, se situant à une longueur d'onde de 656,28 nm, est relativement peu intense, et pratiquement invisible en atmosphère d'air ou d'argon. L'utilisation d'un flux d'hélium permet d'augmenter l'intensité de cette raie d'émission, d'un facteur supérieur à 3. Le flux d'hélium permet simultanément de diminuer considérablement l'intensité du fond et des autres raies caractéristiques de la matrice, améliorant ainsi le rapport signal sur fond-bruit.

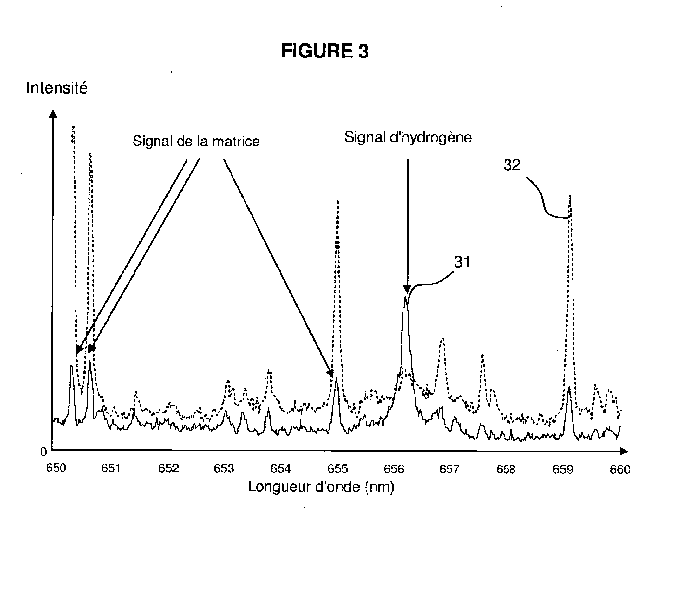

Le figure 3 illustre le gain apporté par l'utilisation d'un flux d'hélium pour l'analyse de l'hydrogène. Les caractéristiques de l'intensité du signal émis autour de la longueur d'onde correspondant à la raie Hα de l'hydrogène sont représentées dans un repère où la longueur d'onde est portée en abscisse, et l'intensité du signal émis en ordonnées. Une première courbe 31, en traits pleins sur la figure, représente l'intensité du signal émis dans le cas où un flux d'hélium est utilisé, et une seconde courbe 32, en traits pointillés sur la figure, représente l'intensité du signal émis dans le cas où un flux d'argon est utilisé. Les deux courbes 31, 32 mettent en évidence le gain en intensité offert par le recours au flux d'hélium, permettant une augmentation sélective de l'intensité du signal correspondant à la raie d'émission Hα de l'hydrogène, tout en réduisant l'intensité du fond et des autres raies caractéristiques de la matrice ne puissent nuire à la mesure, comme cela peut être le cas avec un recours au flux d'argon, ainsi que cela est illustré par la seconde courbe 32.

Une autre spécificité d'un mode de réalisation préféré de la présente invention permet d'améliorer plus encore la résolution. Le gain obtenu grâce à l'utilisation d'un flux d'hélium demeure en effet limité, s'il est souhaité d'obtenir un plasma suffisamment lumineux pour l'analyse de l'hydrogène typiquement à une résolution inférieure à 3 µm. Il est relativement aisé de diminuer la taille d'interaction, cependant cela conduit à un plasma très petit et insuffisamment lumineux pour permettre une détection satisfaisante. La solution proposée par un mode de réalisation préféré de la présente invention est d'augmenter la quantité de lumière collectée par les moyens de mesure de l'intensité du signal 142, afin d'obtenir un signal d'intensité suffisante, et par conséquent une meilleure résolution spatiale.

Cela est rendu possible par un ajustement de la résolution spatiale, en combinant une taille de diaphragme 124 suffisamment petite pour obtenir une taille d'interaction suffisamment fine, de l'ordre de 1 à 2 µm, avec un grandissement adéquat par l'objectif de microscope 129, et une énergie du laser judicieusement choisie. Il est par exemple possible d'utiliser un diaphragme de 50 µm combiné avec un grandissement de 60, pour obtenir une résolution de l'ordre de 1 µm, cette valeur étant limitée par les limites de diffraction du système optique. Un compromis peut par exemple se trouver, dans les conditions de grandissement et de taille de diaphragme précédentes, avec une énergie du laser de l'ordre de 3 µJ en sortie du diaphragme 124, soit environ 2 µJ sur l'échantillon.

Les figures 4a et 4b présentent des schémas illustrant de manière synoptique, des dispositifs de couplage entre un signal optique résultant du rayonnement du plasma, basés respectivement sur un spectromètre et sur un filtre interférentiel, selon un exemple de réalisation préféré de l'invention.

Dans le premier cas, illustré par la figure 4a, où les moyens de mesure du signal 142 sont formés par un spectromètre comprenant une fente 41, le signal optique issu directement du plasma, ou bien en sortie des moyens de recueil du signal 140, par exemple une fibre optique 40, il est nécessaire de recourir à une lentille d'adaptation 400, permettant l'adaptation en ouverture de la source lumineuse, par rapport au spectromètre. Une image 42 de la sortie de la fibre optique 40 est formée au niveau du spectromètre. Le recueil du signal lumineux par la fibre optique 40 étant quasiment optimal, il est nécessaire d'améliorer le couplage fibre-spectromètre. Ce couplage est limité par la faible ouverture et la petite taille de la fente 41 du spectromètre, en comparaison du diamètre et de l'ouverture de la fibre optique 40. D'une manière typique, en utilisant un spectromètre ouvert à F/10,5, et offrant une ouverture numérique de 0,047, avec une fente 41 de 100 µm, couplé à une fibre optique 40 de diamètre 1 mm et d'ouverture numérique 0,22. Le grandissement à appliquer, correspondant au rapport des ouvertures numériques respectivement de la fibre optique 40 et du spectromètre, est de 4,6. Ainsi le diamètre de l'image 42 de la fibre 40 au niveau du spectromètre est de 4,6 mm, soit une surface de 16,6 mm². La surface utile de la fente 41 n'étant que de 0,46 mm², la perte du signal par le couplage fibre-spectromètre s'élève ainsi à un facteur 36.

Ainsi que cela est illustré par la figure 4b, une solution proposée par un mode de réalisation préféré de la présente invention consiste à utiliser un filtre interférentiel 43 entre une seconde lentille de collimation 401 et un photomultiplicateur 44. La bande passante du filtre interférentiel 43 doit être choisie la plus étroite possible. Ainsi, la lumière issue de la sortie de la fibre optique 40 est collimatée par la seconde lentille de collimation 401, dont le diamètre est choisi suffisant pour capter tout le faisceau. Le faisceau lumineux en résultant passe à travers le filtre interférentiel 43 et éclaire le photomultiplicateur 44, le filtre interférentiel 43 forme une fenêtre et n'influe pas sur la géométrie optique de l'ensemble. Par conséquent, il n'y a pas de perte de lumière lors du couplage. Seules les pertes dues aux réflexions sur les faces de la seconde lentille de collimation 401 et la transmission du filtre interférentiel 43 limitent les performances.

Le filtre interférentiel 43 peut par exemple être un filtre à double cavité, de manière à offrir la coupure la plus sélective possible autour de la longueur d'onde centrale du signal d'intérêt, par exemple 656,2 nm pour la raie Hα de l'hydrogène, tout en conservant une transmission importante, de l'ordre de 35%.

Le filtre interférentiel 43 peut être placé sur le photomultiplicateur 44 par l'intermédiaire d'un support approprié. Avantageusement, le support du filtre interférentiel 43 peut comprendre des moyens de réglage, permettant de régler l'orientation du filtre interférentiel 43 dans le but d'ajuster la valeur de la longueur d'onde centrale de celui-ci, par exemple pour compenser une incertitude de fabrication du filtre interférentiel 43.

Il est par exemple possible de choisir le filtre interférentiel 43 avec une bande passante de 0,3 nm. Cette valeur de bande passante peut être préférée à une valeur moindre, par exemple 0,1 nm, de manière à ce que le maximum de la largeur de la raie d'hydrogène soit exploité. En outre, un filtre de bande passante 0,1 nm est un filtre à simple cavité, et les bords de la bande de coupure s'étalent alors assez loin autour de la longueur d'onde centrale ; de la sorte, la sélectivité offerte par un filtre de bande passante 0,1 nm n'est pas significativement meilleure qu'avec le filtre de 0,3 nm, dont la transmission est plus importante.

Ces phénomènes sont illustrés par la figure 5 décrite ci-après, présentant des courbes illustrant les profils temporels des signaux d'émission issus du rayonnement par le plasma, en regard de la fenêtre temporelle de mesure.

Sur la figure 5, une première courbe 50 représente par un trait fin l'intensité du signal d'émission optique en fonction de la longueur d'onde, autour d'une longueur d'onde centrale λ₀.

Une deuxième courbe 51 représente par un trait épais la caractéristique de transmission d'un filtre interférentiel 43 à multiples cavités, de bande passante 0,3 nm, et une troisième courbe 52 représente par des pointillés la caractéristique d'un filtre interférentiel 43 à simple cavité, de bande passante 0,1 nm. Deux zones grisées sur la figure représentent les zones dans lesquelles l'influence de la contribution des signaux d'émission de la matrice et du fond est la plus significative. Il apparaît dans la figure 5 que la contribution des signaux d'émission de la matrice et du fond est plus sensible dans le cas d'une utilisation d'un filtre interférentiel 43 à simple cavité. En outre, l'incertitude sur la valeur de la longueur d'onde centrale du filtre interférentiel 43 est moins contraignante pour un filtre de bande passante plus large.

L'utilisation du filtre interférentiel 43 permet, dans le cas de l'hydrogène, d'augmenter d'au moins un facteur 30 la quantité de lumière recueillie.

Toutefois, la sélectivité spectrale s'avère limitée par rapport à la sélectivité spectrale procurée par un spectromètre. Un mode de réalisation préféré de la présente invention propose de pallier le défaut de sélectivité spectrale par une exploitation judicieuse de la différence de durée de vie de la raie de l'hydrogène, en comparaison aux raies de la matrice et du fond du continuum.

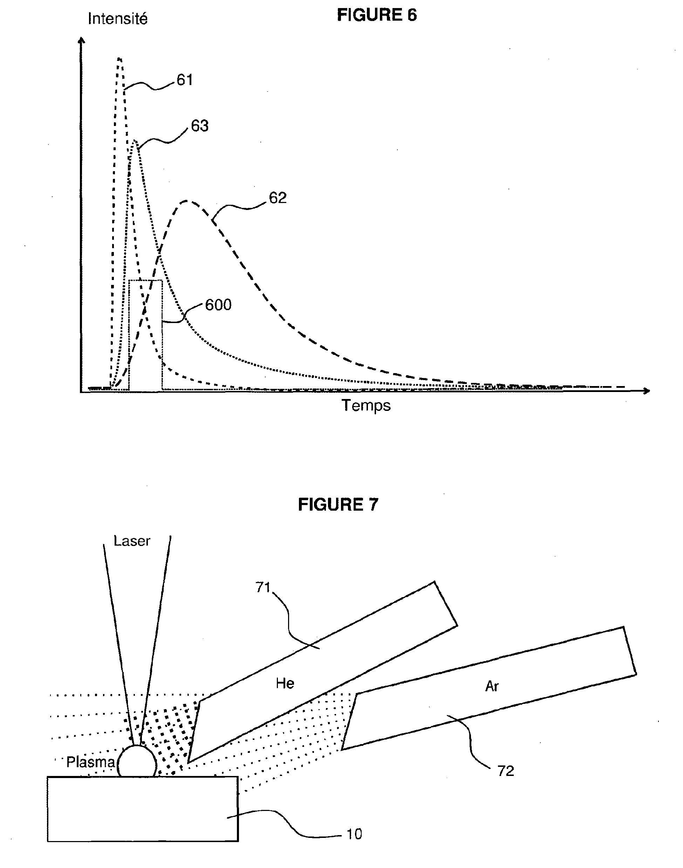

La figure 6 présente des courbes illustrant les profils temporels des signaux d'émission issus du rayonnement par le plasma, en regard de la fenêtre temporelle de mesure, dans un exemple de réalisation préféré de l'invention. Toutes les courbes représentées sur la figure le sont dans un repère cartésien en abscisse duquel figure le temps, et en ordonnée l'intensité du signal d'émission.

Une première courbe 61 représente en traits pointillés l'intensité du signal lié à l'émission du continuum. Une deuxième courbe 62 représente en traits pointillés l'émission liée à la matrice. Une troisième courbe 63 représente en traits pointillés l'émission liée à l'élément d'intérêt, soit l'hydrogène dans cet exemple. Une quatrième courbe 600 représente la caractéristique d'une porte de mesure, définissant la fenêtre temporelle de mesure précitée.

Ainsi que cela est illustré par la figure, la raie d'émission de l'hydrogène figurée par la troisième courbe 63, dure très peu de temps par rapport aux autres raies d'émission figurées par les première et deuxième courbes 61, 62. Il est proposé, selon une spécificité de la présente invention, d'ajuster le retard de la porte de mesure, soit l'instant d'ouverture de la fenêtre temporelle, en se référant par exemple à un temps de référence pouvant être le début de l'impulsion du laser d'ablation, de façon à minimiser le plus possible la contribution du continuum, sans pour autant entraîner une trop grande perte de signal sur la raie d'émission de l'hydrogène. La durée de la fenêtre temporelle de mesure peut être ajustée afin d'exploiter au maximum la durée de la raie d'émission de l'hydrogène, tout en réduisant la composante spectrale due aux raies non désirées, liées par exemple à l'émission des éléments constituant la matrice de l'échantillon, tels que le Fer, le Zirconium, etc. En d'autres termes, la fenêtre temporelle de mesure est définie de manière à maximiser le signal de l'hydrogène tout en augmentant au maximum le contraste Hydrogène - Fond, le fond s'entendant comme comprenant les raies d'émission des éléments constituant la matrice et du continuum.

Avantageusement, une configuration pratique d'analyse de l'élément hydrogène peut définir une fenêtre temporelle de mesure dont le retard par rapport à l'impulsion du laser d'ablation est de l'ordre de 20 à 30 ns, et dont la durée est de l'ordre de 30 à 40 ns. Ces valeurs peuvent être modifiées en fonction de l'énergie délivrée par le laser d'ablation. Notamment, lorsqu'une résolution moins fine, par exemple de l'ordre de 10 µm, est suffisante, et qu'il est possible d'augmenter l'énergie du laser d'ablation pour obtenir un signal de plus forte intensité. Dans un tel cas, la dimension du plasma est plus grosse, et son rayonnement est de durée plus longue, le retard et la durée de la fenêtre temporelle de mesure peuvent alors être adaptés à la durée de vie de la raie d'émission de l'hydrogène en résultant.

D'une manière typique, avec une configuration décrite à titre d'exemple ci-dessus, la quantité de lumière collectée par le photomultiplicateur 44 est telle que celui-ci peut être utilisé avec une tension d'alimentation relativement faible, de l'ordre de 800 à 1000 Volts, ce qui permet d'améliorer encore le rapport signal sur bruit.

La réalisation de la cartographie élémentaire de l'hydrogène à haute résolution spatiale telle que mise en oeuvre selon l'un des modes de réalisation préféré de l'invention décrits ci-dessus repose ainsi sur une combinaison entre le dimensionnement du diaphragme, l'ajustement de l'énergie du faisceau laser d'ablation, l'utilisation d'un filtre interférentiel avec une bande passante adéquate, et l'ajustement de la fenêtre temporelle de mesure pour pallier le défaut de résolution du filtre interférentiel. Ainsi que cela est explicité ci-dessus, la combinaison entre le dimensionnement du diaphragme et l'énergie du laser pulsé permet d'obtenir une taille d'interaction de l'ordre de 1 à 2 µm tout en maîtrisant l'effet du plasma sur le diamètre du cratère, ce dernier définissant la résolution maximale permise. L'utilisation d'un filtre interférentiel permet d'améliorer l'efficacité de la chaîne de transmission optique et permet un gain d'environ 50 sur la quantité de lumière recueillie. L'ajustement des paramètres de la fenêtre temporelle de mesure permet de réduire l'influence des raies de la matrice et du continuum. L'ajustement des paramètres de la fenêtre temporelle est habituellement utilisé dans l'état de la technique, pour optimiser le rapport signal à bruit ; selon la présente invention, l'ajustement des paramètres de la fenêtre temporelle permet d'éliminer l'influence ou la contribution d'éléments interférents. Cette possibilité est particulièrement avantageuse, notamment lorsque l'élément à mesurer possède une raie qui émet plus tôt que l'élément interférent et que sa durée de vie est courte par rapport à ce même élément, ce qui est par exemple le cas pour l'hydrogène. L'ajustement des paramètres de la fenêtre temporelle selon la présente invention permet ainsi de conférer une bonne sélectivité spectrale malgré l'utilisation d'une combinaison d'un filtre interférentiel et d'un photomultiplicateur.

Un autre avantage procuré par un dispositif de cartographie selon l'un des modes de réalisation préféré de la présente invention est qu'il se présente sous une forme particulièrement compacte et relativement peu coûteuse.

La description ci-dessus s'applique notamment à l'élément hydrogène. En ce qui concerne la cartographie et l'analyse de l'élément oxygène ou d'autres éléments, notamment les éléments légers, le dispositif de cartographie selon l'un des modes de réalisation décrits précédemment peut être également mis en oeuvre.

Pour ce qui concerne en particulier l'oxygène, le filtre interférentiel 43 peut être calé sur les raies de longueur d'onde 777 nm. Il existe peu d'éléments interférents à cette longueur d'onde ou aux longueurs d'onde voisines. Ainsi, il est possible d'utiliser un filtre interférentiel 43 présentant une bande passante plus large, par exemple de l'ordre de 0,5 nm, présentant l'avantage d'être moins coûteux relativement à un filtre interférentiel de bande passante plus étroite. Les contraintes en terme de durée de la fenêtre temporelle de mesure sont également moins sévères, car les raies d'émission d'oxygène sont d'une durée plus longue que celles de l'hydrogène. Il est possible de définir la fenêtre temporelle de mesure par des paramètres assez proches de ceux utilisés pour l'hydrogène, par exemple : un retard de l'ordre de 25 à 35 ns, et une durée de l'ordre de 30 à 40 ns, ces paramètres pouvant également être modifiés en fonction de l'énergie du laser d'ablation.

Pour ce qui concerne notamment l'oxygène, le signal optique émanant du rayonnement du plasma peut également être augmenté par l'utilisation d'un jet d'hélium, telle qu'explicitée ci-avant. Cependant, un problème posé par la mesure de l'oxygène sans enceinte de confinement est lié à la présence de l'air. Or l'hélium étant un gaz très léger, il ne permet d'éliminer suffisamment l'air ambiant. Il en résulte une oxydation des particules éjectées par l'ablation. Celles-ci sont par la suite redéposées sur la surface environnante et seront ré-analysées de manière indésirable par les tirs laser suivants. La quantité d'oxygène de l'air piégé dans les oxydes des éléments constituant la matrice, par exemple les oxydes de Fer, de Zirconium, etc., peut devenir non négligeable par rapport à l'oxygène présent dans l'échantillon lui-même. Il en résulte une image extrêmement bruitée qui peut être inexploitable. Afin de résoudre ce problème, dans un mode de réalisation préféré de la présente invention propose avantageusement d'ajouter au flux d'hélium un flux d'argon, ainsi que cela est illustré par la figure 7.

La figure 7 présente un schéma illustrant l'application d'un jet de gaz sur un échantillon sous analyse, dans un exemple de réalisation préféré de l'invention.

La figure 7 présente une vue en coupe illustrant de manière synoptique la configuration de moyens d'injection de gaz sur la surface de l'échantillon 10. Un premier tube 71 peut permettre l'injection d'un flux d'hélium ou d'argon sensiblement au niveau du plasma généré par le laser d'ablation, au niveau de la surface de l'échantillon 10. Le gaz peut par exemple être pourvu au premier tube 71 via une réserve de gaz sous pression, par exemple suivant un débit continu tout au long de la mesure. Avantageusement, le flux de gaz peut être contrôlé par une vanne dont l'ouverture peut être commandée en début de la mesure, et la fermeture commandée en fin de mesure. Dans un dispositif également destiné à la cartographie de l'oxygène, il est avantageusement possible d'adjoindre au premier tube 71, ainsi que cela est décrit précédemment, un second tube 72 permettant d'une manière similaire, l'injection d'argon. Le second tube 72 peut par exemple être disposé en amont du premier tube 71 d'injection de l'hélium. Les moyens d'injection d'argon sont ainsi disposés en retrait par rapport aux moyens d'injection de l'hélium, et permettent d'arroser la surface de l'échantillon. L'injection d'argon permet de souffler l'air ambiant et de limiter le plus possible l'oxydation des particules éjectées.

Typiquement, le premier tube 71 d'hélium ou d'argon peut être placé à environ 200 µm de la surface de l'échantillon, suivant un angle d'attaque de l'ordre de 20 à 30°, et à une distance de l'ordre du millimètre du plasma. Dans le cas où le second tube 72 est utilisé, le second tube 72 peut être disposé en retrait du premier tube 71, à une distance de l'ordre de quelques centimètres de ce dernier, avec un angle d'attaque vis-à-vis de la surface de l'échantillon inférieur à l'angle d'attaque offert par le premier tube 71.

Les valeurs précédemment citées sont des valeurs typiques citées à titre d'exemples non limitatifs de la présente invention.

Il est avantageusement possible de permettre la cartographie simultanée de l'hydrogène et de l'oxygène, en disposant deux fibres optiques et deux moyens de mesure du signal 142 comprenant chacun un filtre interférentiel 43 et un photomultiplicateur 44.

Avantageusement encore, il est possible d'adjoindre à un dispositif selon l'un des modes de réalisation préféré de l'invention décrits ci-dessus, une troisième fibre optique, afin par exemple de permettre la cartographie élémentaire du lithium de manière simultanée avec la cartographie élémentaire de l'hydrogène et/ou l'oxygène. La cartographie simultanée de l'hydrogène, de l'oxygène et du lithium peut ainsi être rendue possible sans requérir le déploiement de dispositifs et de procédés coûteux.

En ce qui concerne le lithium, notamment lorsque celui-ci doit être détecté avec des concentrations très faibles, de l'ordre de 10 ppm, un spectromètre peut être préféré à un photomultiplicateur associé à un filtre interférentiel. En effet, il existe des raies d'émission interférentes très proches de la raie d'émission du Lithium située à une longueur d'onde de 670 nm.

Il est à noter que des performances particulièrement surprenantes en terme de résolution, peuvent être atteintes par un dispositif selon la présente invention, par l'utilisation conjointe du filtre interférentiel 43, avec la définition appropriée des paramètres temporels de la fenêtre temporelle de mesure, ainsi qu'avec l'injection de gaz en surface de l'échantillon.

## Revendications

1. Dispositif de cartographie et d'analyse (1) d'au moins un élément d'intérêt compris dans un échantillon (10) solide par spectrométrie d'émission optique sur plasma produit par laser, comprenant :
• un module de génération d'un faisceau laser pulsé (11), un système de mise en forme du faisceau (12) comprenant au moins une lentille de mise en forme (122) concentrant l'énergie du faisceau au travers d'un diaphragme (124) dudit dispositif, une première lentille de collimation (126) projetant à l'infini l'image du diaphragme (124), un objectif de microscope (129) focalisant l'image du diaphragme (124) sur la surface de l'échantillon (10),
• un système de recueil, de traitement et d'analyse (14) du signal optique issu du rayonnement d'un plasma généré en surface de l'échantillon (10) comprenant au moins des moyens de recueil du signal (140), des moyens de mesure du signal (142) permettant une analyse spectrale du signal optique, et des moyens de traitement et d'analyse (144) permettant l'analyse de la composition élémentaire de l'échantillon (10),
le dispositif de cartographie et d'analyse (1) comprenant des moyens de déplacement de l'échantillon (10) synchronisé avec les impulsions du laser pulsé pour réaliser la cartographie élémentaire, le dispositif étant configuré pour que le recueil du signal optique soit réalisé pendant une fenêtre temporelle de durée déterminée,
le dispositif étant **caractérisé en ce que** l'instant de départ de la fenêtre temporelle présente un retard par rapport aux impulsions du laser pulsé adapté à la raie atomique de l'élément d'intérêt de façon à minimiser le plus possible la contribution du continuum, et ladite durée déterminée est adaptée de façon à exploiter au maximum la durée de vie de ladite raie atomique, les moyens de mesure du signal (142) étant formés par au moins un filtre interférentiel (43) disposé sur un photomultiplicateur (44) dudit dispositif, le filtre interférentiel (43) laissant passer les fréquences situées dans une bande étroite autour de la fréquence correspondant à la longueur d'onde de la raie d'émission de l'élément d'intérêt.

2. Dispositif de cartographie et d'analyse (1) selon la revendication 1, **caractérisé en ce qu'**il est adapté pour l'analyse de l'hydrogène, ledit retard étant compris entre 20 et 30 ns, et ladite durée déterminée étant comprise entre 30 et 40 ns.

3. Dispositif de cartographie et d'analyse (1) selon la revendication 1, **caractérisé en ce qu'**il est adapté pour l'analyse de l'oxygène, ledit retard étant compris entre 25 et 35 ns, et ladite durée déterminée étant comprise entre 30 et 40 ns.

4. Dispositif de cartographie et d'analyse (1) selon l'une quelconque des revendications précédentes, dans lequel les moyens de recueil du signal (140) sont formés par une fibre optique dont une extrémité est disposée à proximité de la surface de l'échantillon (10).

5. Dispositif de cartographie et d'analyse (1) selon l'une quelconque des revendications précédentes, dans lequel les moyens de mesure du signal (142) sont formés par au moins un spectromètre.

6. Dispositif de cartographie et d'analyse (1) selon la revendication 5, dans lequel le filtre interférentiel (43) est à double cavité.

7. Dispositif de cartographie et d'analyse (1) selon l'une quelconque des revendications précédentes, dans lequel le filtre interférentiel (43) est disposé sur le photomultiplicateur (44) par l'intermédiaire d'un support comprenant des moyens de réglage de l'orientation du filtre interférentiel (43), ajustant la valeur de la longueur d'onde centrale du filtre interférentiel (43).

8. Dispositif de cartographie et d'analyse (1) selon l'une quelconque des revendications précédentes, dans lequel le système de mise en forme du faisceau (12) comprend en outre des moyens d'ajustement de l'énergie du faisceau (120).

9. Dispositif de cartographie et d'analyse (1) selon la revendication 8, dans lequel les moyens d'ajustement de l'énergie du faisceau (120) sont formés par un atténuateur.

10. Dispositif de cartographie et d'analyse (1) selon l'une des revendications 8 et 9, dans lequel la taille d'interaction entre le laser pulsé et l'échantillon (10) est déterminée par la dimension principale du diaphragme (124), combinée avec le grandissement de l'objectif de microscope (129), l'énergie étant ajustée via les moyens d'ajustement de l'énergie du faisceau (120).

11. Dispositif de cartographie et d'analyse (1) selon l'une quelconque des revendications précédentes, comprenant en outre des moyens d'injection de gaz sensiblement au niveau de la surface de l'échantillon (10) où le plasma est généré.

12. Dispositif de cartographie et d'analyse (1) selon la revendication 11, dans lequel les moyens d'injection de gaz comprennent un premier tube (71) pour l'injection d'hélium.

13. Dispositif de cartographie et d'analyse (1) selon l'une des revendications 11 et 12, dans lequel les moyens d'injection de gaz comprennent en outre un second tube (72) pour l'injection d'argon.

14. Dispositif de cartographie et d'analyse (1) selon l'une quelconque des revendications précédentes, comprenant en outre des moyens de positionnement précis de l'échantillon (10).

15. Dispositif de cartographie et d'analyse (1) selon l'une quelconque des revendications précédentes adapté pour la cartographie de l'hydrogène simultanément à la cartographie de l'oxygène, comprenant un système de recueil, de traitement et d'analyse (14) adapté à la cartographie de l'oxygène et un système de recueil, de traitement et d'analyse (14) adapté à la cartographie de l'hydrogène.

16. Dispositif de cartographie et d'analyse (1) selon l'une quelconque des revendications précédentes, comprenant en outre un système de recueil, de traitement et d'analyse (14) adapté à la cartographie du lithium, lesdits moyens de mesure du signal (142) dudit système de recueil, de traitement et d'analyse (14) adapté à la cartographie du lithium comprenant un spectromètre.

## Patentansprüche

1. Vorrichtung (1) zum Kartieren und Analysieren von wenigstens einem Element von Interesse aus einer festen Probe (10) durch optische Emissionsspektrometrie auf laserproduziertem Plasma, die Folgendes umfasst:
• ein Modul zum Erzeugen eines gepulsten Laserstrahls (11), wobei ein System (12) zum Formen des Strahls wenigstens eine Formlinse (122) umfasst, die die Energie des Strahls durch eine Membran (124) der Vorrichtung konzentriert, eine erste Kollimationslinse (126), die das Bild der Membran (124) ins Unendliche projiziert, ein Mikroskopobjektiv (129), das das Bild der Membran (124) auf die Oberfläche der Probe (10) fokussiert,
• ein System (14) zum Empfangen, Verarbeiten und Analysieren des optischen Signals, das von der Strahlung eines auf der Oberfläche der Probe (10) erzeugten Plasmas kommt, umfassend wenigstens Mittel (140) zum Empfangen des Signals, Mittel (142) zum Messen des Signals, so dass eine Spektralanalyse des optischen Signals durchgeführt werden kann, und Verarbeitungs- und Analysiermittel (144), die eine Analyse der Elementarzusammensetzung der Probe (10) zulassen,
wobei die Kartier- und Analysiervorrichtung (1) Mittel zum Bewegen der Probe (10) synchronisiert mit den Impulsen des gepulsten Lasers zum Realisieren der Elementarkartierung umfasst, wobei die Vorrichtung so konfiguriert ist, dass das optische Signal während eines Zeitfensters einer bestimmten Dauer empfangen wird,
wobei die Vorrichtung **dadurch gekennzeichnet ist, dass** der Anfangspunkt des Zeitfensters eine Verzögerung in Bezug auf die Impulse des gepulsten Lasers aufweist, angepasst an den atomischen Strahl des Elements von Interesse, um den Beitrag des Kontinuums so weit wie möglich zu minimieren, und die bestimmte Dauer so adaptiert ist, dass sie die Lebensdauer des atomischen Strahls maximal nutzt, wobei die Signalmessmittel (142) durch wenigstens ein Interferenzfilter (43) gebildet werden, das auf einem Fotovervielfacher (44) der Vorrichtung angeordnet ist, wobei das Interferenzfilter (43), die in einem schmalen Band um die Frequenz befindlichen Frequenzen durchlässt, die der Wellenlänge des Emissionsstrahls des Elements von Interesse entspricht.

2. Kartier- und Analysiervorrichtung (1) nach Anspruch 1, **dadurch gekennzeichnet, dass** sie zum Analysieren von Wasserstoff ausgelegt ist, wobei die Verzögerung zwischen 20 und 30 ns und die vorbestimmte Dauer zwischen 30 und 40 ns liegt.

3. Kartier- und Analysiervorrichtung (1) nach Anspruch 1, **dadurch gekennzeichnet, dass** sie zum Analysieren von Sauerstoff ausgelegt ist, wobei die Verzögerung zwischen 25 und 35 ns und die vorbestimmte Dauer zwischen 30 und 40 ns liegt.

4. Kartier- und Analysiervorrichtung (1) nach einem der vorherigen Ansprüche, wobei die Signalempfangsmittel (140) von einem Lichtwellenleiter gebildet werden, von dem ein Ende in der Nähe der Oberfläche der Probe (10) angeordnet ist.

5. Kartier- und Analysiervorrichtung (1) nach einem der vorherigen Ansprüche, bei der die Signalmessmittel (142) von wenigstens einem Spektrometer gebildet werden.

6. Kartier- und Analysiervorrichtung (1) nach Anspruch 5, bei der das Interferenzfilter (43) einen doppelten Hohlraum hat.

7. Kartier- und Analysiervorrichtung (1) nach einem der vorherigen Ansprüche, wobei das Interferenzfilter (43) auf dem Fotovervielfacher (44) mittels eines Trägers angeordnet ist, der Mittel zum Regeln der Orientierung des Interferenzfilters (43) umfasst, unter Justierung des Wertes der mittleren Wellenlänge des Interferenzfilters (43).

8. Kartier- und Analysiervorrichtung (1) nach einem der vorherigen Ansprüche, bei der das Strahlformsystem (12) ferner Mittel zum Justieren der Energie des Strahls (120) umfasst.

9. Kartier- und Analysiervorrichtung (1) nach Anspruch 8, bei der die Mittel zum Justieren der Energie des Strahls (120) von einem Dämpfer gebildet werden.

10. Kartier- und Analysiervorrichtung (1) nach einem der Ansprüche 8 und 9, bei der die Interaktionsgröße zwischen dem gepulsten Laser und der Probe (10) durch die Hauptabmessung der Membran (124) bestimmt wird, kombiniert mit der Größe des Mikroskopobjektivs (129), wobei die Energie über die Mittel (120) zum Justieren der Energie des Strahls justiert wird.

11. Kartier- und Analysiervorrichtung (1) nach einem der vorherigen Ansprüche, die ferner Mittel zum Injizieren von Gas im Wesentlichen an der Oberfläche der Probe (10) umfasst, wo das Plasma erzeugt wird.

12. Kartier- und Analysiervorrichtung (1) nach Anspruch 11, bei der die Mittel zum Injizieren von Gas eine erste Röhre (71) zum Injizieren von Helium umfassen.

13. Kartier- und Analysiervorrichtung (1) nach einem der Ansprüche 11 und 12, bei der die Mittel zum Injizieren von Gas ferner eine zweite Röhre (72) zum Injizieren von Argon umfassen.

14. Kartier- und Analysiervorrichtung (1) nach einem der vorherigen Ansprüche, die ferner Mittel zum genauen Positionieren der Probe (10) umfasst.

15. Kartier- und Analysiervorrichtung (1) nach einem der vorherigen Ansprüche zum Kartieren von Wasserstoff gleichzeitig mit dem Kartieren von Sauerstoff, umfassend ein zum Kartieren von Sauerstoff ausgelegtes Empfangs-, Verarbeitungs- und Analysiersystem (14) und ein zum Kartieren von Wasserstoff ausgelegtes Empfangs-, Verarbeitungs- und Analysiersystem (14).

16. Kartier- und Analysiervorrichtung (1) nach einem der vorherigen Ansprüche, die ferner ein zum Kartieren von Lithium ausgelegtes Empfangs-, Verarbeitungs- und Analysiersystem (14) umfasst, wobei die Signalmessmittel (142) des zum Kartieren von Lithium ausgelegten Empfangs-, Verarbeitungs- und Analysiersystems (14) ein Spektrometer umfassen.

## Claims

1. A device (1) for mapping and analysing at least one element of interest included in a solid sample (10) by optical emission spectrometry on plasma produced by a laser, said device comprising:
• a module for generating a pulsed laser beam (11), a system (12) for shaping the beam, comprising at least one shaping lens (122) concentrating the energy of the beam through a diaphragm (124) of said device, a first collimating lens (126) projecting the image of said diaphragm (124) to infinity, a microscope objective lens (129) focusing the image of said diaphragm (124) onto the surface of said sample (10);
• a system (14) for capturing, processing and analysing the optical signal coming from the radiation of a plasma generated on the surface of said sample (10), at least comprising means (140) for capturing the signal, means (142) for measuring the signal allowing a spectral analysis of the optical signal, and processing and analysing means (144) allowing the analysis of the basic composition of said sample (10),
said device (1) for mapping and analysing comprising means for displacing said sample (10) synchronised with the pulses of the pulsed laser so as to carry out basic mapping, said device being configured so that the optical signal can be captured during a time window with a determined duration,
said device being **characterised in that** the start instant of the time window has a delay relative to the pulses of the pulsed laser adapted to the atomic ray of the element of interest so as to minimise the contribution of the continuum as much as possible, and said determined duration is adapted to use the maximum amount of lifetime of said atomic ray, with said means (142) for measuring the signal being formed by at least one interference filter (43) disposed on a photomultiplier (44) of said device, said interference filter (43) allowing the passage of the frequencies located in a narrow band around the frequency corresponding to the wavelength of the emission ray of the element of interest.

2. The device (1) for mapping and analysing according to claim 1, **characterised in that** it is designed for analysing hydrogen, said delay being between 20 and 30 ns and said determined duration being between 30 and 40 ns.

3. The device (1) for mapping and analysing according to claim 1, **characterised in that** it is designed for analysing oxygen, said delay being between 25 and 35 ns and said determined duration being between 30 and 40 ns.

4. The device (1) for mapping and analysing according to any one of the preceding claims, wherein said signal capture means (140) are formed by an optical fibre, one end of which is disposed in the vicinity of the surface of said sample (10).

5. The device (1) for mapping and analysing according to any one of the preceding claims, wherein said signal measurement means (142) are formed by at least one spectrometer.

6. The device (1) for mapping and analysing according to claim 5, wherein said interference filter (43) is a twin cavity filter.

7. The device (1) for mapping and analysing according to any one of the preceding claims, wherein said interference filter (43) is disposed on said photomultiplier (44) by means of a support comprising means for adjusting the orientation of said interference filter (43), adjusting the value of the central wavelength of said interference filter (43).

8. The device (1) for mapping and analysing according to any one of the preceding claims, wherein said beam shaping system (12) further comprises means (120) for adjusting the energy of said beam.

9. The device (1) for mapping and analysing according to claim 8, wherein said means (120) for adjusting the energy of said beam are formed by an attenuator.

10. The device (1) for mapping and analysing according to any one of claims 8 to 9, wherein the interaction size between said pulsed laser and said sample (10) is determined by the main dimension of said diaphragm (124), combined with the magnification of the microscope objective lens (129), with the energy being adjusted by said means (120) for adjusting the energy of said beam.

11. The device (1) for mapping and analysing according to any one of the preceding claims, further comprising means for injecting gas substantially at the level of the surface of said sample (10) where the plasma is generated.

12. The device (1) for mapping and analysing according to claim 11, wherein said gas injection means comprise a first tube (71) for injecting helium.

13. The device (1) for mapping and analysing according to any one of claims 11 to 12, wherein said gas injection means further comprise a second tube (72) for injecting argon.

14. The device (1) for mapping and analysing according to any one of the preceding claims, further comprising means for precisely positioning said sample (10).

15. The device (1) for mapping and analysing according to any one of the preceding claims, adapted for simultaneously mapping hydrogen and oxygen, comprising a capturing, processing and analysing system (14) adapted for mapping oxygen and a capturing, processing and analysing system (14) adapted for mapping hydrogen.

16. The device (1) for mapping and analysing according to any one of the preceding claims, further comprising a capturing, processing and analysing system (14) adapted for mapping lithium, with said signal measurement means (142) of said capturing, processing and analysing system (14) adapted for mapping lithium comprising a spectrometer.
